# EUROPÄISCHE PATENTSCHRIFT

(11) **EP 3 530 155 B1**
(45) Veröffentlichungstag und Bekanntmachung des Hinweises auf die Patenterteilung: **05.07.2023**
(21) Anmeldenummer: 19154385.9
(22) Anmeldetag: 30.01.2019
(51) Int. Cl.: A47J 31/44

(54) **EINBAUGERÄT ZUR HERSTELLUNG VON AUFGUSSGETRÄNKEN**
INSTALLATION DEVICE FOR THE PRODUCTION OF INFUSED BEVERAGES
DISPOSITIF D'INSTALLATION POUR LA PRODUCTION DE BOISSONS INFUSÉES

(30) Priorität: 26.02.2018 DE 102018104283
(43) Veröffentlichungstag der Anmeldung: 28.08.2019
(73) Patentinhaber: Miele & Cie. KG, 33332 Gütersloh (DE)
(72) Erfinder: Wüstefeld, Michael, 59555 Lippstadt (DE); Pötter, Berthold, 33332 Gütersloh (DE); Kretschmer, Sascha, 33334 Gütersloh (DE)

(56) Entgegenhaltungen:
- EP-A1- 0 783 859
- DE-A1-102012 202 184
- FR-A1- 2 883 089
- US-A1- 2014 150 671

## Beschreibung

Die Erfindung betrifft ein Einbaugerät zur Herstellung von Aufgussgetränken nach dem Oberbegriff des Patentanspruches 1.

Ein derartiges Einbaugerät umfasst neben zahlreichen weiteren Bauelementen beispielsweise auch eine elektronische Steuerungseinheit zur Steuerung oder Regelung sämtlicher interner Abläufe, eine Heizeinrichtung zur Erhitzung von Wasser und/oder zur Herstellung von Wasserdampf und eine Brüheinheit, in der in an sich bekannter Weise Kaffeepulver, Tee oder andere Essenzen mit dem heißen Wasser aufgebrüht werden, sodass daraus das zu erzeugende Aufgussgetränk entsteht.

Einbaugeräte der hier betroffenen Art weisen die Besonderheit auf, dass sie in einen Küchenschrank oder in ein vergleichbares Möbelstück integriert werden und folglich nur ihre Frontseite sichtbar ist. Diese Frontseite wird als eine den Innenraum des Einbaugerätes verschließende Tür ausgeführt, die damit die Möglichkeit schafft, im Innenraum Reinigungs-, Reparatur- und/oder Wartungsarbeiten durchführen zu können beziehungsweise für den Betrieb des Einbaugerätes erforderliche Mittel, wie Wasser, Kaffee, Tee oder Reinigungsmittel aufzufüllen. Hierfür ist der Innenraum des Einbaugerätes als ein Wartungsbereich ausgeführt, in dem ein Wassertank untergebracht sein kann und beispielsweise mehrere Vorratsbehälter zur Aufnahme der genannten Produkte. Die den Innenraum verschließende Tür weist außenseitig einen Ausgabebereich auf, der zumeist als muldenartige Vertiefung ausgeführt ist. Den unteren Abschluss dieses Ausgabebereiches bildet eine Abstellfläche, auf der mindestens ein Trinkgefäß abgestellt werden kann, das mit dem in dem Einbaugerät hergestellten Aufgussgetränk befüllt wird. Die Abstellfläche verfügt darüber hinaus über Ablauföffnungen, durch die verspritzte oder übergelaufene Flüssigkeitsreste in eine unterhalb der Abstellfläche angeordnete Abtropfschale abgeführt werden. Diese Ablauföffnungen können unmittelbar in die Abstellfläche eingebracht sein. Eine andere Ausführungsvariante besteht darin, dass die verspritzten oder übergelaufenen Flüssigkeitsreste über Randöffnungen der Abstellfläche abfließen. In den Ausgabebereich mündet zudem ein Getränkeauslass, der in seiner Höhenlage verstellbar ausgeführt sein kann und an dessen Unterseite wenigstens eine Ausgabedüse vorhanden ist. Natürlich sind hier zumeist mehrere Ausgabedüsen zur Abgabe der hergestellten Aufgussgetränke oder von Getränkezugaben, wie Milch, oder von Mischgetränken in das bereits erwähnte Trinkgefäß vorhanden.

Ein häufig anzutreffendes Problem besteht bei Einbaugeräten darin, dass die Tür ein erhebliches Eigengewicht aufweist und daher sehr stabile Scharniere erfordert. Dies rührt beispielsweise daher, dass der Getränkeauslass bislang in die Tür integriert wurde, was darüber hinaus lösbare und miteinander koppelbare Anschlussleitungen erfordert, die naturgemäß im Laufe der Zeit zunehmend Probleme hinsichtlich der Abdichtung mit sich bringen. Der hierfür erforderliche konstruktive Aufwand ist erheblich und führt damit zu einem erhöhten Herstellungs-, Montage- und Kostenaufwand, sodass ein derartiges, beispielsweise aus der EP 0 783 859 B1 bekanntes Einbaugerät insgesamt verhältnismäßig aufwendig ist.

Um hier Abhilfe zu schaffen ist zum Beispiel aus der DE 10 2012 202 184 A1 ein Getränkebereiter bekannt, bei dem der Getränkeauslass in den Innenraum des Einbaugerätes integriert ist, wobei die um Scharniere schwenkbar gelagerte Tür hierfür eine hinreichend große Durchbrechung aufweist, durch die der Getränkeauslass bei geschlossener Tür in den Ausgabebereich hineinragt. Eine derartige Lösung dient dazu, dass die Scharniere der Tür weniger stabil ausgeführt sein müssen, da die Tür insgesamt ein wesentlich geringeres Eigengewicht aufweist. Zudem können die Kopplungen für die Getränkeleitungen und die hierfür erforderlichen Dichtungen vollständig eingespart werden. Bei der aus der Druckschrift bekannten Ausführung erstreckt sich allerdings die Durchbrechung für den Getränkeauslauf über die gesamte Höhe des Ausgabebereiches, was in nachteiliger Weise zur Folge hat, dass diese von der Frontseite des Einbaugerätes her deutlich sichtbar ist. Zudem besteht die Gefahr, dass ohne aufwendige Dichtungen übergelaufene oder verspritzten Flüssigkeitsreste in den Innenraum des Einbaugerätes gelangen können. Dieser Bereich ist jedoch extrem schwer zu reinigen, wobei durch die Flüssigkeiten hervorgerufene Beschädigungen der innen liegenden Bauelemente nicht auszuschließen sind. Ein weiterer, als nachteilig zu betrachtender Aspekt dieser Lösung ist ferner darin zu sehen, dass ein auf der Abstellfläche des Ausgabebereiches abgestelltes Trinkgefäß beim Öffnen der Tür aus der Tür heraus in den Innenraum des Einbaugerätes fallen kann.

Der Erfindung stellt sich somit das Problem, ein Einbaugerät zur Herstellung von Aufgussgetränken mit einem in den Innenraum integrierten Getränkeauslass bereitzustellen, welches die zuvor erwähnten Nachteile vermeidet und bei dem die Durchbrechung in dem Ausgabebereich möglichst unauffällig gehalten ist.

Erfindungsgemäß wird dieses Problem durch ein Einbaugerät zur Herstellung eines Aufgussgetränkes mit den Merkmalen des Patentanspruchs 1 gelöst.

Vorteilhafte Ausgestaltungen und Weiterbildungen der Erfindung ergeben sich aus den nachfolgenden Unteransprüchen.

Ein Einbaugerät zur Herstellung von Aufgussgetränken umfasst einen in den Innenraum des Einbaugerätes integrierten Getränkeauslass zur Abgabe mindestens eines in dem Einbaugerät hergestellten Aufgussgetränkes und eine das Einbaugerät verschließende Tür mit einer Durchbrechung, durch die bei geschlossener Tür der Getränkeauslass hindurch und in einen in der Frontseite der Tür ausgebildeten Ausgabebereich hineinragt, wobei unterhalb des bei geschlossener Tür in den Ausgabebereich hineinragenden Getränkeauslasses eine zum Abstellen eines Trinkgefäßes ausgeführte Abstellfläche vorhanden ist.

Die erfindungsgemäße Ausführung ist darin zu sehen, dass zwischen der in die Rückwand der Tür eingebrachten Durchbrechung und der Abstellfläche ein Randsteg ausgebildet ist.

Mit der Erfindung gelingt es, ein derartiges Einbaugerät insgesamt wesentlich einfacher und im Aufbau kompakter zu gestalten, weil der Getränkeauslass nicht mehr in die Tür integriert ist. Dieser wird, wie bereits ausgeführt wurde, in dem Innenraum des Einbaugerätes vorgesehen, was unter anderem dazu führt, dass beispielsweise die Scharniere der Tür einfacher ausgeführt werden können und diese insgesamt ein geringeres Gewicht aufweist. Zudem sind keine Kopplungen beziehungsweise Dichtungen für die Anschlussleitungen mehr erforderlich. Ein auf der Abstellfläche des Ausgabebereiches abgestelltes Trinkgefäß kann wegen des erfindungsgemäßen Randsteges zudem beim Öffnen der Tür nicht in den Innenraum des Einbaugerätes fallen und ist somit in dem Ausgabebereich gesichert aufgestellt. Hinter dem durch die Tür gebildeten Randsteg können Aggregate und Komponenten angeordnet werden, die bei geschlossener Tür nicht sichtbar sein sollen und bei geöffneter Tür zugänglich sein müssen. Darüber wird mit der erfindungsgemäßen Lösung erreicht, dass übergelaufene oder verspritzte Flüssigkeitsreste nicht in das Geräteinnere gelangen können, was zu einer Verbesserung der Sauberkeit und der Reduzierung des Risikos von Beschädigungen der im Innenraum des Einbaugerätes vorhandenen Aggregate und Bauelemente führt. Insgesamt ergibt sich mit der Erfindung jedoch auch eine Verbesserung der Reinigungsmöglichkeiten, die insbesondere in dem Ausgabebereich von Bedeutung sind, da dieser nach außen sichtbar ist. Die vorgestellte Lösung kann mit einem Sensor oder Endlagenschalter kombiniert werden, der den Getränkeauslass automatisch in seine obere Endposition verfährt, wenn die Tür geöffnet werden soll. Dadurch kann erreicht werden, dass die Durchbrechung lediglich minimale Abmessungen aufweisen muss, was ihre optische Wahrnehmbarkeit zusätzlich reduziert.

Eine erste Ausgestaltung der Erfindung besteht darin, dass der unterhalb der Durchbrechung vorhandene Randsteg eine Höhe zwischen 2 cm und 15 cm aufweist. Die Höhe des vorhandenen Randsteges richtet sich dabei auch nach der Ausführung des Ausgabebereiches und dem maximalen Verfahrweg des Getränkeauslasses.

Um die in der Tür vorhandene Durchbrechung optisch zu verschließen, wird darüber hinaus vorgeschlagen, innenraumseitig des Einbaugerätes eine Blende vorzusehen. Die Blende ist dabei bevorzugt fest im Innenraum des Einbaugerätes installiert, sodass die Tür beim Öffnen von der Blende wegbewegt wird und die Blende beim Schließen der Tür die Durchbrechung verschließt.

Eine erste, bevorzugte Ausführungsvariante ist dabei darin zu sehen, dass die Blende bei geschlossener Tür passgenau in die Durchbrechung eingefügt ist. Durch ein passgenaues Einfügen der Blende in die Durchbrechung kann diese optimal verschlossen werden und wird für den Betrachter nahezu unsichtbar. Hierfür sind allerdings geringe Maßtoleranzen erforderlich, was zwar fertigungstechnisch etwas aufwendiger ist, jedoch erhebliche Vorteile mit sich bringt, da diese Lösung besonders einfach gestaltet ist.

Ein alternativer Vorschlag hierzu besteht darin, die Blende mit Abmessungen auszustatten, die größer sind, als die Durchbrechung in der Tür, sodass die Blende bei geschlossener Tür an einer rückseitigen Oberfläche der Rückwand des Ausgabebereiches der Tür anliegt. Der Vorteil einer derartigen Lösung ist darin zu sehen, dass Maßtoleranzen hierbei keine Rolle spielen. Der optische Übergang zwischen der Durchbrechung und der bei geschlossener Tür dahinter angeordneten Blende lässt sich beispielsweise durch eine geeignete Farbgebung oder durch den Einsatz sehr dünner Komponenten reduzieren.

Eine sehr vorteilhafte Weiterbildung der Erfindung geht darüber hinaus dahin, dass die sichtbaren Oberflächen der Blende und des Ausgabebereiches optisch gleichartig ausgeführt sind. Die Gleichartigkeit der Oberflächen bezieht sich hierbei auf die Rauheit, die Farbgebung und/oder den Werkstoff der Blende und zumindest des die Durchbrechung umgebenden Abschnittes des Ausgabebereiches. Hierbei werden wenigstens der die Durchbrechung umgebende Teil des Ausgabebereiches und die Blende mit der gleichen Rauheit, einer identischen Farbgebung und/oder aus dem gleichen Werkstoff gefertigt. Als geeignete Werkstoffe lassen sich hierfür beispielsweise Metall, bevorzugt Edelstahl oder Aluminium, Kunststoff, Glas oder Plexiglas anführen. Darüber hinaus können die genannten Werkstoffe auch mit Oberflächenbeschichtungen, wie beispielsweise Emaille, versehen werden. Glatte Oberflächen sind für Einbaugeräte der hier betroffenen Art besonders geeignet, da sie sich auf einfache Weise reinigen lassen.

Eine besondere Bedeutung hat für die Gestaltung des optisch möglichst nicht auffallenden Überganges zwischen der Durchbrechung und der im Innenraum des Einbaugerätes angeordneten Blende der Rand der in der Rückwand vorhandenen Durchbrechung. Dieser Rand sollte möglichst optisch nahtlos in die Blende übergehen, weshalb eine sehr vorteilhafte Ausgestaltung der Erfindung darin gesehen wird, dass der Rand der Durchbrechung mit einer Phase ausgestattet ist, die in einer besonders bevorzugten Ausführungsvariante vollständig umlaufend, also entlang des gesamten Randbereiches der Durchbrechung verläuft. Als Phase wird erfindungsgemäß allgemein ein nicht scharfkantiger Übergang verstanden, weshalb hierunter auch eine Rundung des Randbereiches zu subsumieren ist.

Es hat sich jedoch gezeigt, dass der Übergang optisch nahezu vollständig untergeht, das heißt, nicht mehr sichtbar ist, wenn die Phase mit der sichtbaren Oberfläche der Rückwand des Ausgabebereiches einen spitzen Winkel, also einen Winkel zwischen α > 0° und α < 90° einschließt. Unter einem spitzen Winkel wird hierbei jeder Winkel verstanden, der ungleich und kleiner als 90° ist.

Besonders positive Ergebnisse haben sich ergeben, wenn die Phase mit der sichtbaren Oberfläche der Rückwand des Ausgabebereiches einen spitzen Winkel zwischen α > 30° und α < 60° einschließt, wobei eine Phase mit der sichtbaren Oberfläche der Rückwand des Ausgabebereiches in einem Winkel von α = 45° sowohl fertigungstechnisch einfach herzustellen ist, als auch einen optisch optimalen Übergang schafft, der für das menschliche Auge nahezu nicht mehr wahrnehmbar ist.

Eine darüber hinaus gehende Steigerung lässt sich nur dadurch erreichen, dass der Rand der in der Rückwand vorhandenen Durchbrechung im Anlagebereich an der Blende zweistufig ausgeführt ist, wobei ein rechtwinklig zur sichtbaren Oberfläche der Rückwand verlaufender Abschnitt in die zuvor beschriebene Phase übergeht, die den Winkel α mit der sichtbaren Oberfläche der Rückwand einschließt. Letztlich mündet die erfindungsgemäße Erkenntnis darin, dass allgemein ausgedrückt ein mehrstufiger Übergang zwischen der sichtbaren Oberfläche des Ausgabebereiches im Abschnitt der Durchbrechung und der Blende optisch von entscheidendem Vorteil ist, um die gesamte Oberfläche als möglichst einheitlich wahrzunehmen.

Bei einem Einbaugerät nach der Erfindung kommt in an sich bekannter Weise auch ein Getränkeauslass zum Einsatz, der in seiner Höhenlage verstellbar ausgeführt ist. Dabei ist es unerheblich, ob der Getränkeauslass manuell oder automatisiert, also maschinell verstellbar ist. Für die vorliegende Lösung lässt sich die Verstellbarkeit des Getränkeauslasses dahingehend nutzen, dass die Durchbrechung in der Tür auf eine Größe beschränkt werden kann, die ein Öffnen der Tür nur ermöglicht, wenn der Getränkeauslauf sich in seiner oberen Endposition befindet. Dies ermöglicht eine Reduzierung der Durchbrechung auf Minimalmaße, was insgesamt von Vorteil ist, weil diese optisch noch weniger auffällig wirkt. Durch die Reduzierung der Abmessungen der Durchbrechung wird folglich auch der zwischen der Unterseite der Durchbrechung und der Abstellfläche vorhandene Randsteg erhöht. Folglich ist es insgesamt von Bedeutung, dass die Durchbrechung für den Getränkeauslass im oberen Teil des Ausgabebereiches der Tür, also der Abstellfläche gegenüberliegend, vorgesehen wird.

Auch bei dem erfindungsgemäßen Einbaugerät wird der Innenraum bevorzugt als Wartungsbereich ausgeführt und dient damit der Aufnahme verschiedener Vorratsbehälter, wie sie beispielsweise für die Aufbewahrung von Reinigungsmitteln oder für die Aufnahme von Kaffee, Tee oder anderen Getränkezusätzen benötigt werden. Darüber hinaus kann sich in dem Wartungsbereich auch ein Wasserbehälter befinden, wenn das Einbaugerät nicht an eine Wasserleitung angeschlossen ist, die eine dauerhafte Versorgung mit frischem Trinkwasser gewährleistet.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung des Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: beispielhaft ein Einbaugerät mit einer leicht geöffneten Tür in einer perspektivischen Ansicht,
- Figur 2:: das Einbaugerät aus Figur 1 in einer Frontalansicht, bei dem der Getränkeauslass sich in einer oberen Endposition befindet,
- Figur 3:: das Einbaugerät aus Figur 1 in einer Frontalansicht, bei dem der Getränkeauslass sich in einer unteren Endposition befindet,
- Figur 4:: ein Einbaugerät in einer perspektivischen Ansicht und mit einem in den Ausgabebereich eingehängten Milchbehälter,
- Figur 5:: den Blick in den Innenraum eines Einbaugerätes, bei geöffneter Tür,
- Figur 6:: ausschnittsweise einen Blick auf die Rückwand des Ausgabebereiches mit einer dahinter angeordneten Blende,
- Figur 7:: den Blick VII aus Figur 6
und
- Figur 8:: die vergrößerte Darstellung VIII aus Figur 7.

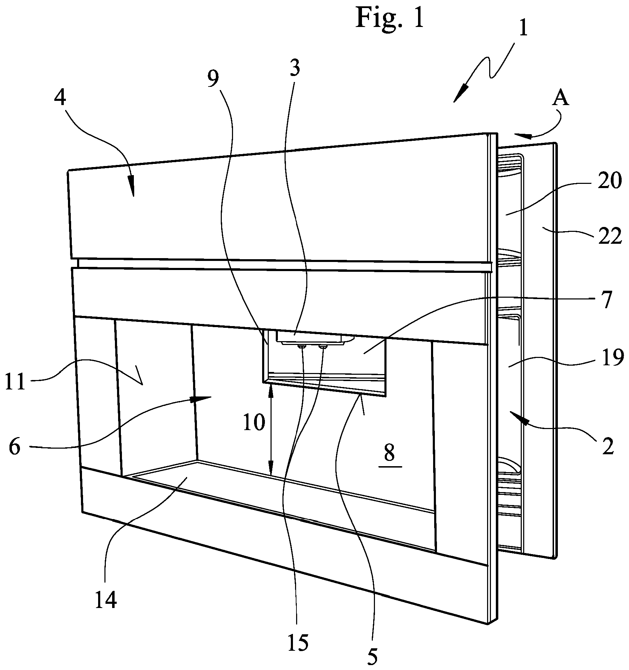

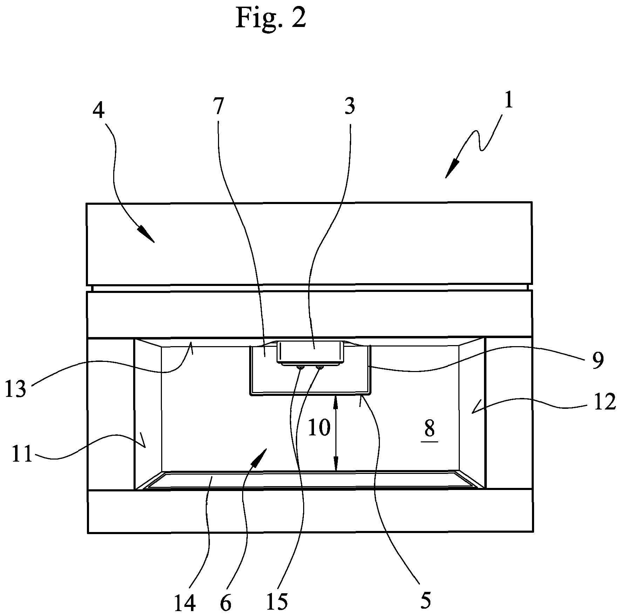

Bei dem in Figur 1 gezeigten Einbaugerät 1 handelt es sich um einen Getränkebereiter zur Herstellung von Aufgussgetränken, also beispielsweise zur Zubereitung von Tee oder Kaffee. Die Besonderheit eines derartigen Einbaugerätes 1 besteht darin, dass dieses in einen Küchenschrank integriert wird und somit platzsparend untergebracht ist. Das dargestellte Einbaugerät 1 weist einen als muldenartige Vertiefung ausgeführten Ausgabebereich 6 als Bestandteil einer Tür 4 auf, der von mehreren Wänden begrenzt ist, von denen in der Figur 1 lediglich die Rückwand 8 und eine Seitenwand 11 erkennbar sind. Den unteren Teil des Ausgabebereiches 6 bildet eine Abstellfläche 14, auf der ein Trinkgefäß abgestellt werden kann, das mit einem in dem Einbaugerät 1 hergestellten Aufgussgetränk befüllt wird. Die Abstellfläche 14 weist darüber hinaus mehrere, in der Figur 1 nicht dargestellte Ablauföffnungen auf, über die verspritzte oder übergelaufene Flüssigkeitsreste in eine unterhalb der Abstellfläche 14 angeordnete Auffangschale 17 abgeführt werden. Darüber hinaus mündet in den Ausgabebereich 6 ein in seiner Höhe verstellbarer Getränkeauslass 3, an dessen Unterseite bei dem gezeigten Ausführungsbeispiel mehrere Ausgabedüsen 15 vorhanden sind, die der Abgabe der hergestellten Aufgussgetränke oder von Getränkezugaben, wie Milch oder von Mischgetränken dienen. Durch die Höhenverstellbarkeit des Getränkeauslasses 3 kann dieser zwischen einer oberen und einer unteren Endlage hin- und herbewegt werden, wobei sich der Getränkeauslass 3 in Figur 1, wie auch in der Darstellung der Figur 2 in seiner oberen Endlage befindet. Ein weiterer, positiver Aspekt der Verstellbarkeit des Getränkeauslasses 3 besteht darin, dass eine für den Durchlass des Getränkeauslasses 3 ausgeführte und in den Ausgabebereich 6 eingebrachte Durchbrechung 5 nur im oberen Teil des Ausgabebereiches 6 vorgesehen werden muss. Dadurch ergibt sich zwischen dem unteren Rand der Durchbrechung 5 und der Abstellfläche 14 ein Randsteg 10, der den maßgeblichen Vorteil hat, dass der Ausgabebereich 6 einfach zu reinigen ist und ein in dem Ausgabebereich 6 abgestelltes Trinkgefäß beim Öffnen der Tür 4 nicht in den Innenraum 2 des Einbaugerätes 1 fallen kann. Der Randsteg 10 bildet damit eine Anlagefläche und stützt das Trinkgefäß insbesondere in einer solchen Situation ab.

Aus der Figur 1 ist jedoch auch erkennbar, dass der Randbereich der Durchbrechung 5 umlaufend mit einer Phase 9 ausgestattet ist, die einen optisch kaum wahrnehmbaren Übergang zwischen dem Ausgabebereich 6 und einer in diesem Fall im Innenraum 2 fest installierten Blende 7 bildet. Da die Darstellung der Figur 1 durch die leicht geöffnete Tür 4 teilweise einen Blick in den Innenraum 2 des Einbaugerätes 1 gestattet, wird ein Teil des Korpus 22 des Einbaugerätes 1 erkennbar, wobei gleichzeitig ein in dem als Wartungsbereich ausgeführten Innenraum 2 vorhandener Wassertank 19 sowie ein Vorratsbehälter 20 sichtbar werden.

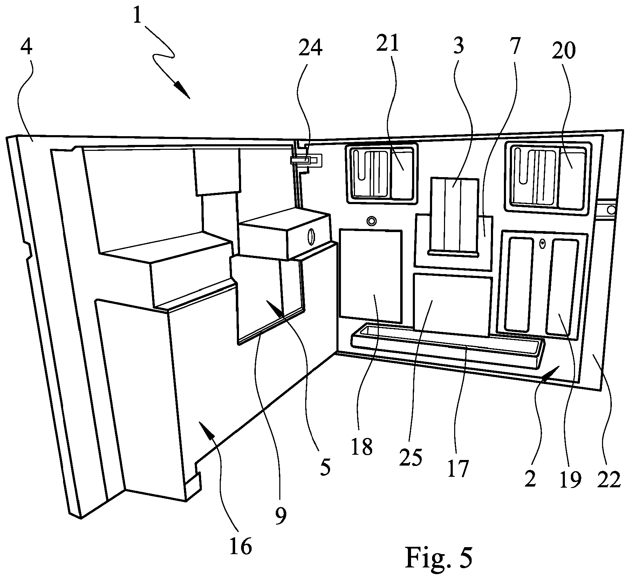

Das Einbaugerät 1 in der Figur 1 weist zudem mehrere, als Blenden ausgeführte Verkleidungsteile auf, die hauptsächlich ästhetischen Gesichtspunkten entsprechen und, wie auch der Ausgabebereich 6, beispielsweise aus Metall, Kunststoff, Glas oder Plexiglas bestehen können. Um den Innenraum 2 eines derartigen Einbaugerätes 1 zugänglich zu machen, ist hier die gesamte Frontseite als Tür 4 ausgeführt, die geöffnet und verschlossen werden kann, wozu Scharniere 24 vorhanden sind, die einerseits an der Innenseite der Tür 4 und andererseits an einer Innenwand des Einbaugerätes 1 fixiert sind, was jedoch anschaulicher aus der Darstellung in Figur 5 hervorgeht.

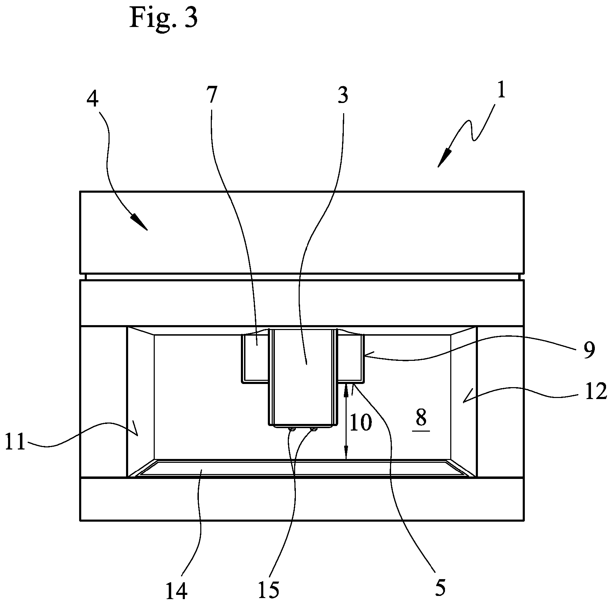

Aus der Figur 2 geht das Einbaugerät 1 aus Figur 1 in einer Frontalansicht hervor, bei dem der Getränkeauslass 3 sich in einer oberen Endposition befindet, während die Figur 3 das Einbaugerät 1 aus Figur 1 ebenfalls in einer Frontalansicht zeigt und hier der Getränkeauslass 3 eine untere Endposition einnimmt, wie sie von Vorteil ist, wenn beispielsweise ein Espresso zubereitet werden soll, der in kleine Tassen gefüllt wird. Durch die Möglichkeit des Absenkens des Getränkeauslasses 3 wird das Verspritzten von Flüssigkeit wesentlich reduziert oder gänzlich vermieden. Der Ausgabebereich 6 ist bei dieser Ausführung eines Einbaugerätes 1 mit ebenen Wänden 11, 12, einer ebenen Deckfläche 13, einer ebenfalls ebenen Rückwand 8 sowie der als untere Begrenzung des Ausgabebereiches 6 dienenden Abstellfläche 14 ausgestattet, die ihrerseits zumindest im Bereich unterhalb des Getränkeauslasses 3 eben ausgeführt ist.

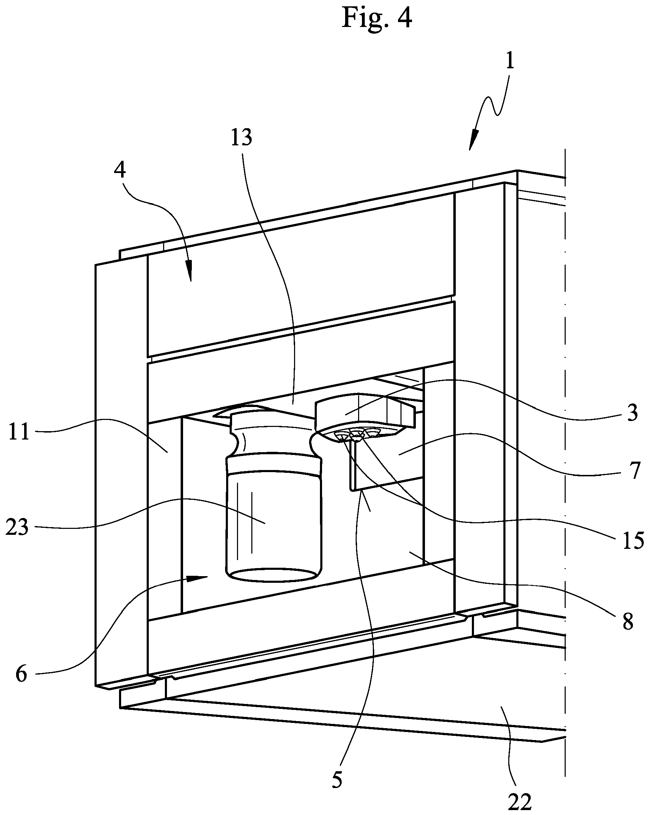

In der Figur 4 ist eine weitere Variante eines Einbaugerätes 1 in einer perspektivischen Ansicht und mit einem in den Ausgabebereich 6 eingehängten Milchbehälter 23 dargestellt. Der Milchbehälter 23 ist hierbei in die Deckfläche 13 eingehängt, wozu ein geeigneter Adapter in die Deckfläche 13 integriert ist. Aus dem Milchbehälter 23 kann Milch zur Zubereitung verschiedener Aufgussgetränke aus Milch oder mit Milch als Bestandteil entnommen werden. Der Vorteil des in die Deckfläche 13 eingehängten Milchbehälters 23 besteht beispielsweise darin, dass ein Abstand zwischen der Unterseite des Milchbehälters 23 und der unterhalb des Milchbehälters 23 vorhandenen Abstellfläche 14 besteht, sodass dadurch die Reinigung der Abstellfläche 14 möglich wird, ohne, dass der Milchbehälter 23 entfernt werden muss. Aus der räumlichen Ansicht in Figur 4 wird auch der Korpus 22 des Einbaugerätes 1 sichtbar, wobei in der Darstellung ein Blick auf die Unterseite des Korpus 22 möglich ist.

Einen Blick in den Innenraum 2 eines Einbaugerätes 1, bei geöffneter Tür 4 zeigt hingegen die Figur 5. Der Innenraum 2 ist hierbei als Wartungsbereich ausgeführt und bietet eine Vielzahl unterschiedlicher Möglichkeiten der Aufbewahrung, sodass er beispielsweise einen Behälter 18, einen Wassertank 19 und zwei Vorratsbehälter 20 und 21 aufnimmt. Der Innenraum 2 weist aber auch den Getränkeauslass 3 und die dahinter fest installierte Blende 7 auf. Unterhalb des Getränkeauslasses 3 befindet sich ferner die bereits zuvor erwähnte Auffangschale 17, die mit einem Abfallbehälter 25 ausgestattet ist, der zur Aufnahme der bei der Herstellung eines Aufgussgetränkes anfallenden, organischen Abfälle dient. Da die Tür 4 in Figur 5 in einem geöffneten Zustand dargestellt ist, kann man im Übergang zwischen dem Korpus 22 und der Tür 4 die Scharniere 24 erkennen, um die die Tür 4 schwenkbar am Korpus 22 befestigt ist. Durch die geöffnete Tür 4 ist zudem ein Blick auf die Innenseite 16 der Tür mit ihrer strukturierten Innenoberfläche möglich, wobei sich etwa mittig der Innenseite 16 der Tür der Durchbruch 5 mit der in seinem Randbereich umlaufend vorhandenen Phase 9 befindet.

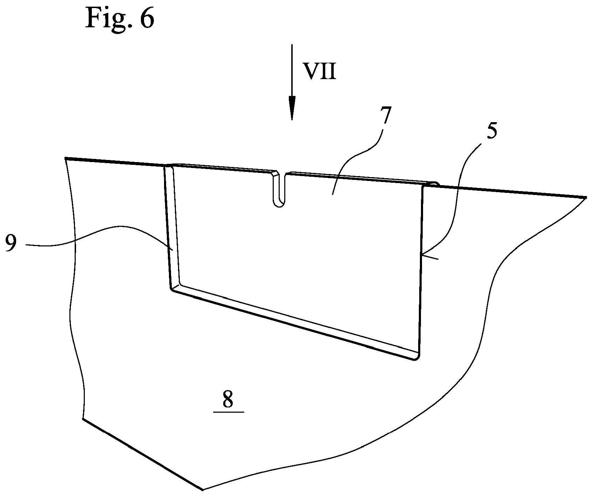

In der Figur 6 ist ausschnittsweise ein Blick auf die Rückwand 8 des Ausgabebereiches 6 mit der dahinter angeordneten Blende 7 dargestellt. Hieraus wird noch einmal deutlicher, als aus den zuvor beschriebenen Darstellungen sichtbar, dass der Durchbruch 5 in der Rückwand 8 entlang seiner Umfangslinie eine Phase 9 aufweist und die im Innenraum 2 des Einbaugerätes 1 angeordnete Blende 7 größere Abmessungen aufweist, als der Durchbruch 5 und sich damit an die Rückseite der Rückwand 8 anlegt, wenn die Tür 4 geschlossen ist.

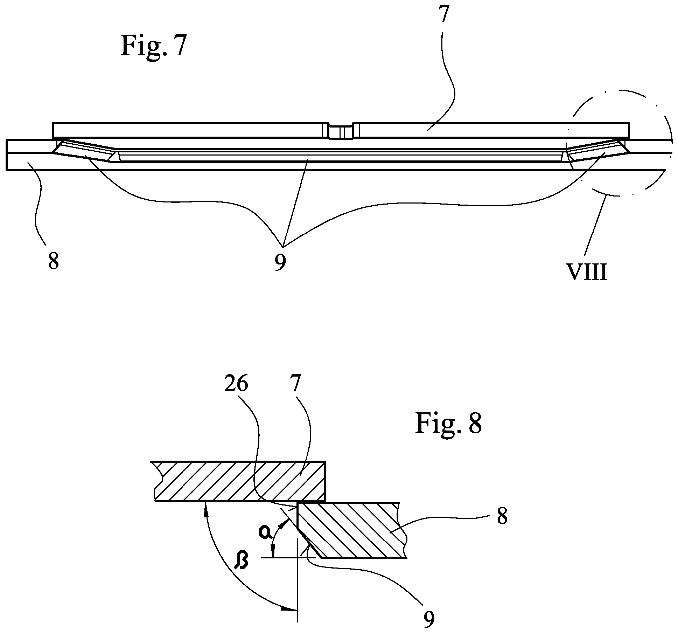

Der Blick in Richtung des Pfeils VII in Figur 6 geht aus der Figur 7 hervor. Im Zusammenhang mit der vergrößerten Darstellung VIII in Figur 7, die Gegenstand der Figur 8 ist, wird noch einmal deutlich, wie hierbei die Phase 9 im Randbereich der Durchbrechung 5 gestaltet ist. Die Phase der in die Rückwand 8 eingebrachten Durchbrechung 5 geht von einem rechtwinklig zur ebenen Oberfläche der Rückwand 8 verlaufenden Abschnitt 26 (Winkel β = 90 °) in die unter dem Winkel α = 45° zur Oberfläche der Rückwand 8 verlaufende Phase 9 über. Zudem wird insbesondere aus der Darstellung in Figur 8 deutlich, dass die Blende 7 größere Abmessungen aufweist, als die Durchbrechung 5 und sich damit mit einem Teil ihrer Oberfläche an die Rückseite der Rückwand 8 des Ausgabebereiches 6 anlegt. Die Anlage der Blende 7 an der Rückwand 8 erfolgt dabei bevorzugt unter Bildung einer Dichtung. Es ist vorstellbar, dass die spezielle Ausführung der Phase 9 eine verbesserte Reinigung des gesamten Ausgabebereiches 6 ermöglicht und zudem einen optischen Übergang zwischen der Durchbrechung 5 und der Rückwand 8 schafft, der für den Betrachter nahezu überhaupt nicht mehr sichtbar ist, sodass die gesamte Rückwand 8 wie eine einheitliche Fläche erscheint.

### BEZUGSZEICHENLISTE:

- 1: Einbaugerät
- 2: Innenraum
- 3: Getränkeauslass
- 4: Tür
- 5: Durchbrechung
- 6: Ausgabebereich
- 7: Blende
- 8: Rückwand
- 9: Phase
- 10: Randsteg
- 11: Seitenwand
- 12: Seitenwand
- 13: Deckfläche
- 14: Abstellfläche
- 15: Ausgabedüsen
- 16: Innenseite
- 17: Auffangschale
- 18: Behälter
- 19: Wassertank
- 20: Vorratsbehälter
- 21: Vorratsbehälter
- 22: Korpus
- 23: Milchbehälter
- 24: Scharniere
- 25: Abfallbehälter
- 26: Abschnitt

## Patentansprüche

1. Einbaugerät (1) zur Herstellung von Aufgussgetränken, umfassend:
- einen in den Innenraum (2) des Einbaugerätes (1) integrierten Getränkeauslass (3) zur Abgabe mindestens eines in dem Einbaugerät (1) hergestellten Aufgussgetränkes,
- eine das Einbaugerät (1) verschließende Tür (4) mit einer Durchbrechung (5), durch die bei geschlossener Tür (4) der Getränkeauslass (3) hindurch und in einen in der Frontseite der Tür (4) als muldenartige Vertiefung ausgebildeten Ausgabebereich (6) hineinragt, wobei unterhalb des bei geschlossener Tür (4) in den Ausgabebereich (6) hineinragenden Getränkeauslasses (3) eine zum Abstellen eines Trinkgefäßes ausgeführte Abstellfläche (14) vorhanden ist, welche den unteren Teil des in der Tür (4) ausgebildeten Ausgabebereichs (6) bildet,
**dadurch gekennzeichnet, dass**
zwischen der in die Rückwand (8) der Tür (4) eingebrachten Durchbrechung (5) und der Abstellfläche (14) ein Randsteg (10) ausgebildet ist.

2. Einbaugerät nach Anspruch 1,
**dadurch gekennzeichnet, dass**
der unterhalb der Durchbrechung (5) vorhandene Randsteg (10) eine Höhe zwischen 2 cm und 15 cm aufweist.

3. Einbaugerät nach einem der vorstehend genannten Ansprüche,
**dadurch gekennzeichnet, dass**
innenraumseitig des Einbaugerätes (1) eine Blende (7) angeordnet ist, die bei geschlossener Tür (4) die Durchbrechung (5) in der Tür (4) verschließt.

4. Einbaugerät nach Anspruch 3,
**dadurch gekennzeichnet, dass**
die Blende (7) bei geschlossener Tür (4) passgenau in die Durchbrechung (5) eingefügt ist.

5. Einbaugerät nach Anspruch 3,
**dadurch gekennzeichnet, dass**
die Blende (7) Abmessungen aufweist, die größer sind, als die Durchbrechung (5) in der Tür (4) und die Blende (7) bei geschlossener Tür (4) an einer rückseitigen Oberfläche der Rückwand (8) des Ausgabebereiches (6) der Tür (4) angelegt ist.

6. Einbaugerät nach einem der Ansprüche 3 bis 5,
**dadurch gekennzeichnet, dass**
die sichtbaren Oberflächen der Blende (7) und des Ausgabebereiches (6) gleichartig ausgeführt sind.

7. Einbaugerät nach einem der vorstehend genannten Ansprüche,
**dadurch gekennzeichnet, dass**
der Rand der in der Rückwand (8) vorhandenen Durchbrechung (5) eine Phase (9) aufweist.

8. Einbaugerät nach Anspruch 7,
**dadurch gekennzeichnet, dass**
die Phase (9) mit der sichtbaren Oberfläche der Rückwand (8) des Ausgabebereiches (6) einen spitzen Winkel zwischen α > 0° und α < 90° einschließt.

9. Einbaugerät nach Anspruch 7,
**dadurch gekennzeichnet, dass**
die Phase (9) mit der sichtbaren Oberfläche der Rückwand (8) des Ausgabebereiches (6) einen spitzen Winkel zwischen α > 30° und α < 60° einschließt.

10. Einbaugerät nach Anspruch 7,
**dadurch gekennzeichnet, dass**
die Phase (9) mit der sichtbaren Oberfläche der Rückwand (8) des Ausgabebereiches (6) einen Winkel von α = 45° einschließt.

11. Einbaugerät nach einem der Ansprüche 8 bis 10,
**dadurch gekennzeichnet, dass**
der Rand der in der Rückwand (8) vorhandenen Durchbrechung (5) im Anlagebereich an der Blende (7) zweistufig ausgeführt ist, wobei ein rechtwinklig zur sichtbaren Oberfläche der Rückwand (8) verlaufender Abschnitt (26) in die Phase (9) übergeht, die den Winkel (α) mit der sichtbaren Oberfläche der Rückwand (8) einschließt.

12. Einbaugerät nach einem der vorstehend genannten Ansprüche,
**dadurch gekennzeichnet, dass**
der Getränkeauslass (3) in seiner Höhenlage verstellbar ausgeführt ist.

13. Einbaugerät nach Anspruch 12,
**dadurch gekennzeichnet, dass**
die Durchbrechung (5) der Tür (4) auf eine Größe beschränkt ist, die ein Öffnen der Tür (4) nur ermöglicht, wenn der Getränkeauslauf (3) sich in seiner oberen Endposition befindet.

14. Einbaugerät nach einem der vorstehend genannten Ansprüche,
**dadurch gekennzeichnet, dass**
der Innenraum (2) des Einbaugerätes (1) als Wartungsbereich ausgeführt ist.

## Claims

1. Installation apparatus (1) for producing infusion beverages, comprising:
- a beverage outlet (3) for dispensing at least one infusion beverage produced in the installation apparatus (1), which outlet is integrated into the interior (2) of the installation apparatus (1),
- a door (4) which closes the installation apparatus (1) and has an opening (5) through which, when the door (4) is closed, the beverage outlet (3) passes and projects into a dispensing region (6) which is formed in the front face of the door (4) as a trough-like recess, a storage area (14) designed for storing a drinking vessel being present below the beverage outlet (3) which projects into the dispensing region (6) when the door (4) is closed, and forming the lower part of the dispensing region (6) formed in the door (4),
**characterised in that**
an edge connecting piece (10) is formed between the opening (5) introduced into the rear wall (8) of the door (4) and the storage area (14).

2. Installation apparatus according to claim 1,
**characterised in that**
the edge connecting piece (10) present below the opening (5) has a height between 2 cm and 15 cm.

3. Installation apparatus according to either of the preceding claims,
**characterised in that**
a screen (7) is arranged on the inside of the installation apparatus (1), which screen closes the opening (5) in the door (4) when the door (4) is closed.

4. Installation apparatus according to claim 3,
**characterised in that**
when the door (4) is closed, the screen (7) is inserted into the opening (5) so that it precisely fits.

5. Installation apparatus according to claim 3,
**characterised in that**
the screen (7) has dimensions that are larger than the opening (5) in the door (4) and, when the door (4) is closed, the screen (7) is placed on a rear surface of the rear wall (8) of the dispensing region (6) of the door (4).

6. Installation apparatus according to any of claims 3 to 5,
**characterised in that**
the visible surfaces of the screen (7) and the dispensing region (6) are designed identically.

7. Installation apparatus according to any of the preceding claims,
**characterised in that**
the edge of the opening (5) present in the rear wall (8) has a phase (9).

8. Installation apparatus according to claim 7,
**characterised in that**
the phase (9) encloses an acute angle between α > 0° and α < 90° with the visible surface of the rear wall (8) of the dispensing region (6).

9. Installation apparatus according to claim 7,
**characterised in that**
the phase (9) encloses an acute angle between α > 30° and α < 60° with the visible surface of the rear wall (8) of the dispensing region (6).

10. Installation apparatus according to claim 7,
**characterised in that**
the phase (9) encloses an angle of α = 45° with the visible surface of the rear wall (8) of the dispensing region (6).

11. Installation apparatus according to any of claims 8 to 10,
**characterised in that**
the edge of the opening (5) present in the rear wall (8) is designed in two stages in the contact region on the screen (7), a portion (26) extending at right angles to the visible surface of the rear wall (8) transitioning into the phase (9) which encloses the angle (α) with the visible surface of the rear wall (8).

12. Installation apparatus according to any of the preceding claims,
**characterised in that**
the beverage outlet (3) is designed to be adjustable in its height position.

13. Installation apparatus according to claim 12,
**characterised in that**
the opening (5) of the door (4) is limited to a size that allows the door (4) to be opened only when the beverage outlet (3) is in its upper end position.

14. Installation apparatus according to any of the preceding claims,
**characterised in that**
the interior (2) of the installation apparatus (1) is designed as a maintenance region.

## Revendications

1. Appareil encastrable (1) destiné à la production de boissons infusées, comprenant :
- une sortie de boisson (3) intégrée dans l'espace interne (2) de l'appareil encastrable (1) et destinée à délivrer au moins une boisson infusée produite dans l'appareil encastrable (1),
- une porte (4) fermant l'appareil encastrable (1) et comportant une percée (5), à travers laquelle, lorsque la porte (4) est fermée, la sortie de boisson (3) passe et fait saillie dans une zone de distribution (6) formée dans la face avant de la porte (4) en tant que renfoncement en forme de cuvette, dans lequel, au-dessous de la sortie de boisson (3) faisant saillie dans la zone de distribution (6) lorsque la porte (4) est fermée, une surface de pose (14) réalisée pour la pose d'un récipient pour boire est présente, laquelle forme la partie inférieure de la zone de distribution (6) formée dans la porte (4),
**caractérisé en ce que**
entre la percée (5) ménagée dans la paroi arrière (8) de la porte (4) et la surface de pose (14), une nervure de bord (10) est formée.

2. Appareil encastrable selon la revendication 1,
**caractérisé en ce que**
la nervure de bord (10) présente au-dessous de la percée (5) présente une hauteur entre 2 cm et 15 cm.

3. Appareil encastré selon l'une des revendications précédentes précitées,
**caractérisé en ce que**
côté espace interne de l'appareil encastrable (1), un diaphragme (7) est disposé, lequel ferme la percée (5) dans la porte (4) lorsque la porte (4) est fermée.

4. Appareil encastrable selon la revendication 3,
**caractérisé en ce que**
le diaphragme (7) est introduit sur mesure dans la percée (5) lorsque la porte (4) est fermée.

5. Appareil encastrable selon la revendication 3,
**caractérisé en ce que**
le diaphragme (7) présente des dimensions qui sont supérieures à la percée (5) dans la porte (4) et le diaphragme (7) est aménagé sur une surface côté arrière de la paroi arrière (8) de la zone de distribution (6) de la porte (4) lorsque la porte (4) est fermée.

6. Appareil encastrable selon l'une des revendications 3 à 5,
**caractérisé en ce que**
les surfaces visibles du diaphragme (7) et de la zone de distribution (6) sont réalisées de manière similaire.

7. Appareil encastrable selon l'une des revendications précédentes précitées,
**caractérisé en ce que**
le bord de la percée (5) présente dans la paroi arrière (8) présente une phase (9).

8. Appareil encastrable selon la revendication 7,
**caractérisé en ce que**
la phase (9) forme avec la surface visible de la paroi arrière (8) de la zone de distribution (6) un angle aigu entre α > 0° et α < 90°.

9. Appareil encastrable selon la revendication 7,
**caractérisé en ce que**
la phase (9) forme avec la surface visible de la paroi arrière (8) de la zone de distribution (6) un angle aigu entre α > 30° et α < 60°.

10. Appareil encastrable selon la revendication 7,
**caractérisé en ce que**
la phase (9) forme avec la surface visible de la paroi arrière (8) de la zone de distribution (6) un angle de α = 45°.

11. Appareil encastrable selon l'une des revendications 8 à 10,
**caractérisé en ce que**
le bord de la percée (5) présente dans la paroi arrière (8) est réalisé dans la zone d'appui en deux étapes sur le diaphragme (7), dans lequel une section (26) s'étendant perpendiculairement à la surface visible de la paroi arrière (8) passe dans la phase (9) formant l'angle (α) avec la surface visible de la paroi arrière (8).

12. Appareil encastrable selon l'une des revendications précédentes précitées,
**caractérisé en ce que**
la sortie de boisson (3) est réalisée de manière à être réglable en hauteur.

13. Appareil encastrable selon la revendication 12,
**caractérisé en ce que**
la percée (5) de la porte (4) est limitée à une taille qui ne permet une ouverture de la porte (4) que lorsque la sortie de boisson (3) se trouve dans sa position terminale supérieure.

14. Appareil encastrable selon l'une des revendications précédentes précitées,
**caractérisé en ce que**
l'espace interne (2) de l'appareil encastrable (1) est réalisé comme une zone de maintenance.
